# EUROPEAN PATENT SPECIFICATION

(11) **EP 2 012 608 B1**
(45) Date of publication and mention of the grant of the patent: **15.09.2010**
(21) Application number: 07736798.5
(22) Date of filing: 20.04.2007
(51) Int. Cl.: A41D 27/24, B29C 65/00, C09J 5/00

(54) **A METHOD FOR JOINING TWO OR MORE PIECES OF FABRIC AND RELATED ITEMS**
VERFAHREN ZUM VERBINDEN VON ZWEI ODER MEHR GEWEBETEILEN UND VERWANDTEN ARTIKELN
PROCEDE DE JONCTION DE DEUX OU PLUSIEURS PIECES DE TISSU ET ARTICLES CONNEXES

(30) Priority: 21.04.2006 IT MI20060805
(43) Date of publication of application: 14.01.2009
(73) Proprietor: Grotto S.P.A., 36010 Chiuppano (VI) (IT)
(72) Inventor: GROTTO, Roberto, 36010 Chiuppano, Vicenza (IT)
(74) Representative: Long, Giorgio
(86) International application number: PCT/IT2007/000294
(87) International publication number: WO 2007/122661

(56) References cited:
- EP-A- 0 708 163
- US-A- 5 885 679
- US-A1- 2005 230 026

## Description

### TECHNICAL FIELD OF THE INVENTION

The object of the present invention is a method for integrally joining two or more pieces of fabric when manufacturing items such as items of clothing or upholstery, and the like. This invention further relates to items manufactured by means of said method for joining two or more pieces of fabric such as items of clothing, upholstery, and the like.

### BACKGROUND OF THE INVENTION

In the textile field, it has been for some time a well-established practice that two or more pieces of cloth for manufacturing for example an item of clothing are only joined by sewing.

Seams are usually provided between cloth margins, with a fabric thread being alternately passed through each margin and on both sides of the respective margins. The thread can be sewed more or less close to ensure either a greater or lower holding between the two margins according to the desired item to be made.

In any case, while seams ensure an optimum holding and are the conventional method for joining pieces of cloth, mainly for items of clothing, however, they can cause some drawbacks.

A major drawback with seams is mainly connected to items of clothing is caused by the friction occurring at the seams. In fact, due to the nature of seams, the thread that is passed several times through the cloth, for example of a pair of trousers, inevitably originates a rough area due to the thickness of the seam thread, which is necessarily larger than the surrounding fabric. Thereby, the seam forms a series of geometrical relieves on the fabric surface. Furthermore, in a pair of trousers, seams are often provided in those areas where friction against the body is the greatest. Accordingly, it is understood that this friction causes discomfort and reddening.

In the case of newborn or baby clothing, in addition to said friction drawback, a problem may also rise due to allergies that can be caused by certain types of threads used for seams. It has been proved that, in fact, allergies like contact dermatitis have been found to be due to the threads used for seams, which force people to give up wearing certain items of clothing.

Furthermore, it should be noted that a certain time is required for carrying out such an apparently simple operation like sewing, which time is connected on the one side to the type of seam to be made, and on the other side to the efficacy of the methods being used. In fact, when a seam is provided by hand, it always requires quite a long time to be carried out, even when made by skilled operators. Furthermore, the requirement of conditioning the holding is subordinate to the thread thickness, which as such, worsens the drawbacks set forth above.

### SUMMARY OF THE INVENTION

The problem at the heart of the present invention is thus to provide a method for integrally joining two or more pieces of fabric which is capable of resolving the drawbacks and problems stated above.

This problem is solved by means of a method for joining two or more pieces of fabric such as claimed in the annexed independent claim.

A first object of the present invention is thus a method for joining two or more pieces of fabric in a quick and effective manner while aiming at lightening the provision of seam threads, and the thickness thereof, with the advantage of avoiding allergies or discomfort caused by friction.

The method according to the present invention is useful to provide fabric-based items, such as items of clothing, wherein the pieces composing the same are joined by means of the aforesaid method which can be optionally associated with traditional seam resulting from careful industrial productive process.

### BRIEF DESCRIPTION OF THE FIGURES

Further characteristics and advantages of the present invention will be better understood from the description below of an embodiment thereof, which is given as a non-limiting example with reference to the figures in which:
- Fig. 1 is a top plane view of two fabric margins placed together, which are to be joined in accordance with the invention;
- Fig. 2 is a top perspective view of the two margins in Fig. 1 in a first step of the joining method according to the invention;
- Fig. 3 is a top perspective view of the two margins in Fig. 1 in a second step of the joining method according to the invention;
- Fig. 4 is a top perspective view of the two margins in Fig. 1 in a third step of the joining method according to the invention;
- Fig. 5 is a top perspective view of the two margins in Fig. 1 in a fourth step of the joining method according to the invention;
- Fig. 6 is a top plan view of a trouser leg portion made according to the invention;
- Fig. 7A is a schematic view of a first variant embodiment of the invention;
- Fig. 7B is a schematic view of a second variant embodiment of the invention;
- Fig. 7C is a schematic view of a third variant embodiment of the invention;
- Fig. 7D is a schematic view of a fourth variant embodiment of the invention;
- Fig. 7E is a schematic view of a fifth variant embodiment of the invention.

### DETAILED DESCRIPTION OF THE INVENTION

The concept at the heart of the present invention is that of replacing the seam thread with a different means for joining two or more pieces of fabric, or at least reducing the thickness or amount thereof and complementing the joining of said pieces with said means while maintaining optimum resistance characteristics.

In order to develop this concept, it has been surprisingly found that two pieces of fabric can be joined to each other in a very effective manner using a particular type of adhesive that is directly applied at the edges of said pieces to be joined or by means of a double-adhesive tape, which becomes the substrate, and by subjecting said edges of said pieces to a pressure heat sealing process.

Particularly, the method for joining two or more pieces of fabric comprises the following sequential steps:
- providing two or more pieces of woven or nonwoven fabric;
- pre-heating at least the edges of said pieces that are to be joined;
- applying a layer of bioadhesive consisting of a polyester-based polyurethane polymer in the liquid state on at least one of the respective edges of said pieces to be joined;
- applying pressure and heat to heat-melt and press said polymer layer such as to cause the latter to penetrate between the fibers of said pieces of woven or non woven fabric and create an integral join to each other.

It should be noted that by "fabric" is meant herein a material obtained by weaving warp and weft fibers, whereas by "nonwoven fabric" is designated a material of which the fibers, either of natural or synthetic origin, are randomly arranged and interlaced by means of techniques such as mechanical needling, pressure hydro-needling, heat-sealing.

Particularly, it has been observed that when the margins of woven or nonwoven fabric are subjected to a pre-heating step at a temperature ranging between 50°C and 200°C, preferably 100°C and 200°C, more preferably 170°C before applying the polymeric adhesive layer and subsequently pressure heat-sealing, the function of the adhesive polymeric layer joining said pieces is surprisingly enhanced in terms of tear strength, wash strength and subsequent finishing, standard usage and ageing resistance treatments.

Preferably, the pre-heating step can be carried out by blowing a jet of hot air on said edges.

The polyester-based polyurethane polymer has been selected such as to offer the technical condition required for the best performance of the final product both for the industrial manufacture of the latter and for the life of the product (item of clothing) that is subjected to a considerable physical-chemical stress such as washing, temperature changes, physical stress.

Furthermore, a polyester-based polyurethane polymer has been preferably selected to be characterized by 78A shore hardness, 124°C softening point, and Melt Flow Index of 13-18.5 dg/min at 190°C, 2.16 kg. A polymer provided with said physical-chemical characteristics advantageously allows meeting particular requirements of strength and holding, softness, elasticity, extensivity, and wash resistance for the final product.

In fact, it should be taken into account that an item of clothing is generally affected by a number of factors, among which material selection, friction, surface load, smoothness as well as surface hardness and lubrication. By selecting said characteristics, a wear-free product has been advantageously obtained which lacks holding defects between the joining points of the woven or nonwoven fabric pieces composing the final product.

Preferably, the polyester-based polyurethane polymer is a second-generation elastomeric polyurethane provided with a very good binding force at low activation temperatures while maintaining optimum characteristics of softness, extension and recovery.

Furthermore, the Shore Hardness value stated above, which is also designated as the softness indicator, has been calculated using a durometer.

The Softening Point value, also designated as the softening level, has been calculated in accordance with DIN 51005 standard.

The Melt Flow Index value, also designated as the fluidity, has been calculated as an output flow in decigrams/min through a standard orifice of 2.0955 ± 0.0051 mm diameter and 8.000 ± 0.025 mm length when a fixed pressure is applied to the fluid by means of a piston and a total mass load of 2.16 kg at a temperature of 190°C.

Furthermore, the polymer used in the present invention is preferably characterized by a weight of 32 g/m² for a thickness of 25 µm, 46.5 g/m² for a thickness of 40 pm, 62 g/m² for a thickness of 50 µm and 124 g/m² for a thickness of 100 pm.

Generally, the polymer characteristics comprise an operating temperature ranging between -30°C and 130°C, lamination conditions (hot roll laminator, belt laminator or plate laminator) at a temperature ranging between 140° and 180°C at a pressure between 2.8 and 4.2 Bar for 10 seconds, melt conditions ranging between 115° and 120°C at 2.8-4.2 Bar for 25 seconds according to the type of equipment used, moulding conditions at a temperature of 200°C for 30 seconds.

During the step of applying temperature and pressure, pressures are generally used ranging between 1.3 bar and 7 bar and temperatures ranging between 140°C and 220°C, for a time ranging between 10 sec and 30 sec. Preferably, pressure ranges between 5.5 bar and 6.5 bar, more preferably 6 bar, whereas the temperature ranges between 195°C and 205°C, more preferably it is 200°C and the time is 19 sec to 21 sec, more preferably it is 20 sec.

In addition, right after applying heat and pressure, the method can comprise a step of cooling the joined pieces ranging from 1 to 5 minutes, preferably 2 minutes before subjecting said pieces to further processing. This step is carried out by leaving the pieces on the same support on which the heating and pressure step has been carried out, whether a press basement, an ironing board, or a support belt subjected to pressure by means of two heated rolls.

The function of this step is to allow a gradual cooling without causing thermal shocks to the adhesive and thus ensuring an optimum functionality.

Preferably, furthermore, the method in accordance with the present invention comprises a preliminary step of treating the edges of said pieces of fabric such as to remove impurities and residues of glues or chemicals that can alter the function of the polymeric adhesive. Particularly, this treatment can comprise, in turn, washings, oxidative and/or enzymatic desizing, bio-polishing, stone-polishing.

In addition, the method can comprise, after this treatment step, a step of processing said edges by means of salvaging.

A final settling step can be also provided at the end of the cooling step, in order to ensure that the polyurethane adhesive binds under controlled temperature conditions ranging between 18°C and 30°C, preferably between 20°C and 25°C and humidity ranging between 10% and 30% for a time not lower than 12 hours, preferably between 18 and 24 hours. This step further allows ensuring that the item of clothing can be washed even under sever conditions, finishing and standard usage by the purchaser without experiencing a decrease in the quality of the join of the pieces of fabric composing this item of clothing.

Generally, the step of applying the polymeric layer can be carried out by applying a ribbon-like backing on which said polymeric adhesive layer is spread, or by depositing the polymeric layer directly on the edges of said pieces of woven or nonwoven fabric.

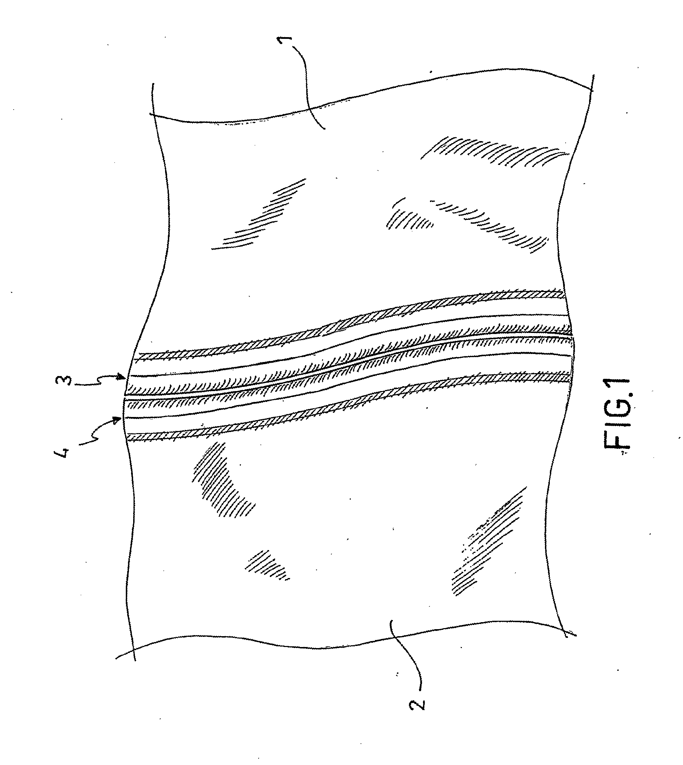

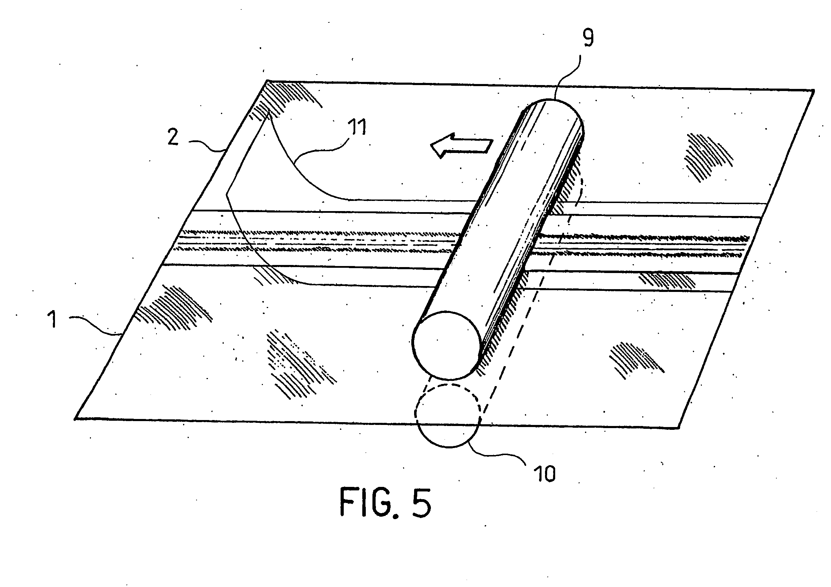

The first method for applying the polymeric layer on the edges by means of adhesive tape with bio-polymeric adhesive as described above, will be described below with reference to Fig. 1 to 6.

In Fig. 1, a first piece of fabric is generally designated with 1 and a second piece of fabric with 2.

The first piece 1 and second piece 2 of fabric lay on a same plane such that the respective edges 3 and 4 face each other.

Preferably, the edges 3 and 4 are provided with a salvage seam to prevent the fiber composing the piece of fabric from unravelling and optionally to provide an aesthetic value. Particularly, the seam can be "an overcast stitch" (three threads) or "a chain stitch" (five threads).

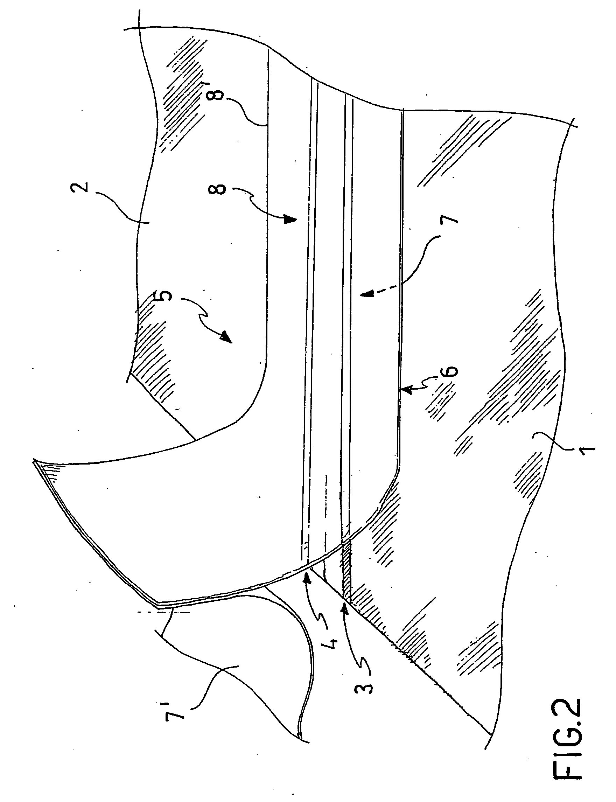

After the pieces of fabric have been arranged as discussed above, a double-adhesive tape 5 is placed on both pieces 1 and 2 along the edges 3 and 4 as shown in Fig. 2.

The double adhesive tape 5 consists of a thin, heat-resistant backing 6 having a substantially plane shape, and being provided with a first face 7 and a second face 8. Furthermore, said first 7 and second 8 faces are covered with a web of heat-sealing substance such as that described above, which is in turn protected by a removable heat-resistant strip 7', 8'.

One of the two protective strips 7', 8' (the strip 7', in Fig. 2) is removed to allow placing the double-adhesive tape 5 onto the seams 3, 4 such that the heat-sealing substance web on the surface 7 of said tape completely covers the seams.

After the tape 5 has been placed as said above, it is subjected to pressing and heating pressure. The pressure generally ranges between 4 bar and 7 bar, whereas the temperature ranges between 190°C and 220°C for a time ranging between 18 and 22 sec. Preferably, the pressure ranges between 5.5 bar and 6.5 bar, more preferably it is 6 bar, whereas the temperature ranges between 195°C and 205°C, more preferably it is 200°C and the time is 19 to 21 sec., more preferably it is 20 sec.

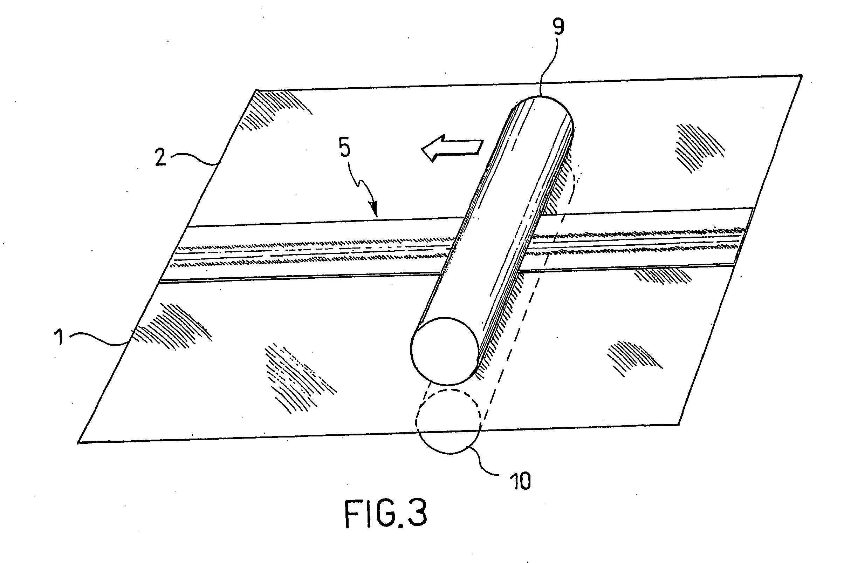

Heat-sealing can be carried out by means of conventional methods and equipment, such as hot pressing with a corresponding press, or as schematically shown in Fig. 3, pressing between two counter-posed overheated rolls, the portion of fabric covered with the double-adhesive tape 5 being passed therethrough in the direction indicated by the arrow in Fig. 3.

Preferably, heat-sealing can be carried out in two different steps in which said step of applying the temperature and pressure is followed by a so-called ironing step which is usually carried out to prepare the item of clothing for sale and is simply ironing this item. In the method according to the present invention, this ironing step is carried out in a substantially identical manner as the step of applying temperature and pressure described above for the application of the polymeric bio-adhesive layer.

Particularly, by way of non-limiting example, said two steps can be carried out in accordance with two different types of machines and the following settings:

| Operation | Application of bio-adhesive strip cod. 3405 150 Micron 10 mm |
|---|---|
| | |
| Machine | MACPI 30 |
| | |
| Temp. | 170°C |
| Speed | 3m/min |
| Pressure | 1.4 Atm effective |
| | |
| | |
| Operation | Pressure with a gluing press egde/strip |
| | |
| Machine | MACPI 9134 |
| | |
| Temp. | 180°C |
| Time Machine | 20 sec. |
| Pressure | 6.0 Atm effective |

As stated above, due to pressure and temperature, the heat-sealing substance cures between the fabric weave in the vicinity of both pieces 3, 4 thus bridling them and making said pieces integrally joined to each other.

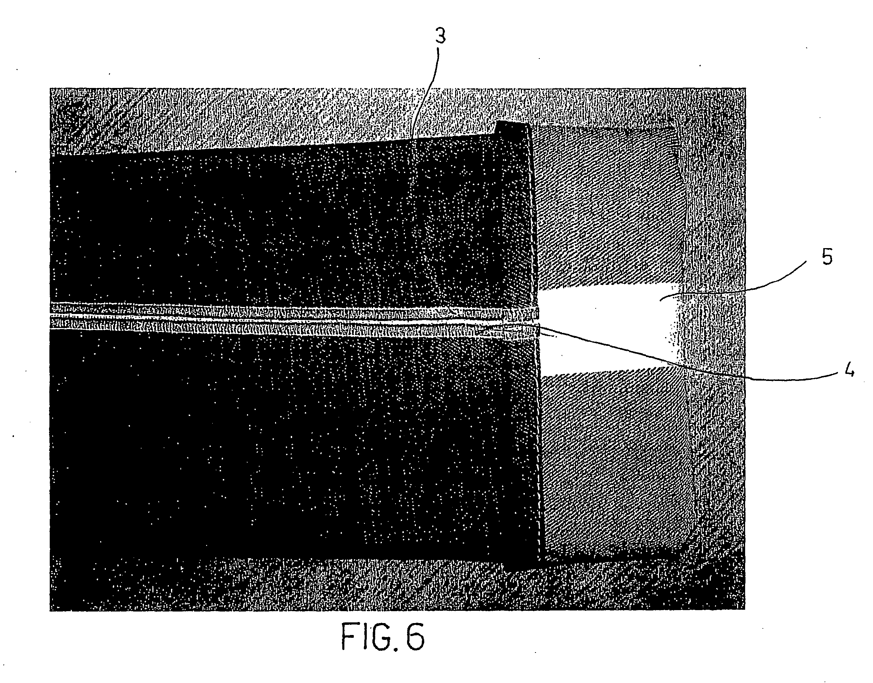

The method described above can be carried out on a surface of the two pieces 3, 4 of fabric, preferably on that surface which will be hidden after the item has been completed. For example, when making a pair of trousers, as shown in Fig. 6, the tape 5 can be provided to be applied on the inner side of a trouser leg. Thereby, the tape 5 would be hidden without altering the aesthetic characteristics of the trouser itself.

Furthermore, the method can comprise a step of applying a band on the double-adhesive tape 5.

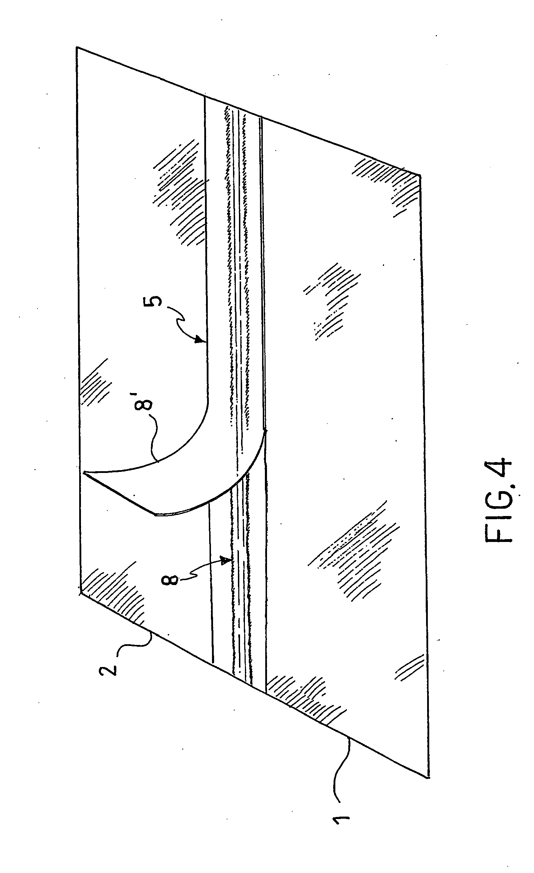

Particularly, the double-adhesive tape 5 may cause discomfort, in turn, when it comes in contact with the body. In this regard, as shown in Fig. 4, the protective strip 8' can be removed from the free surface 8 of tape 5 to allow said band to be applied. In fact, by this operation, a further web of heat-sealing substance is exposed, on which a band 11 is placed and heat-sealing is subsequently carried out between the band and tape in a completely similar manner as described above.

The band 11 can be any pre-cut tape, such as to cover the tape 5. Particularly, the band 11 can be made of a soft, comfortable and antiallergic fabric to give, for example, an optimum fit to the item clothing. Advantageously, the band also has the function of increasing the resistance of the sealing of the two pieces 3, 4 of fabric.

In accordance with a variant embodiment of the invention, the method can be carried out on the surface of the two pieces 3, 4 of fabric exposed to sight. In this case, the same operations will be carried out as described above, except that the band 11 may be decorative, and thus offer the opportunity of customizing an item of clothing, for example, such as a pair of trousers.

A further variant embodiment of the invention is applying the double-adhesive tape 5 on both surfaces of the pieces 3, 4 of fabric.

The advantage of applying double-adhesive tape 5 on said surfaces is that the strength of the sealing between the pieces 3, 4 is increased, mainly in case of items of clothing that must meet particular requirements. For example, a greater strength is often required for traditional seams of work or children clothes at the conventional sewing. This arrangement allows obtaining the desired strength while avoiding the aforesaid drawbacks connected to traditional seams.

In accordance with the second application procedure, a layer of polymeric bioadhesive such as that discussed above is directly applied on the edges of said pieces of woven or nonwoven fabric to be joined by carrying out entirely conventional operations.

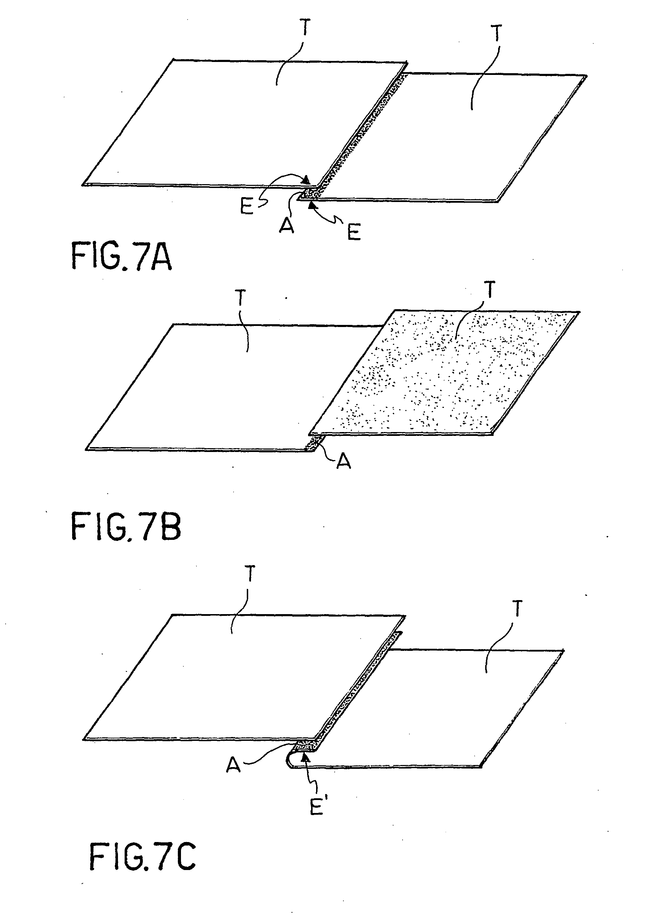

Particularly, the modes of positioning the edges or margins of woven or nonwoven fabric are schematically represented in the annexed Fig. 7A-7E.

In Fig. 7A, a join is shown between two pieces T of woven or nonwoven fabric, which are both positioned such as to have the same face on the same side, by overlapping the two edges E with a polymeric bioadhesive layer A being interposed therebetween. This type of join is known in the field as the rightside to backside join.

In Fig. 7B, a join is shown between two pieces T of woven or nonwoven fabric by overlapping the two edges E with a polymeric bioadhesive layer A being interposed therebetween, which is similar to that shown in Fig. 7A except that the pieces T being on a same side face the right side (i.e. the face considered as being exposed when the finished product is worn) and the other on the back side (i.e. the face opposite the right side). This type of join is known in the field as the backside to backside join.

In Fig. 7C, a join is shown between two pieces T of woven or nonwoven fabric by overlapping the two edges E with a polymeric bioadhesive layer A being interposed therebetween, similar to that shown in Fig. 7A, except that an edge E' of a piece T is folded before applying the adhesive A. This type of join is known in the field as the rightside to right folded join.

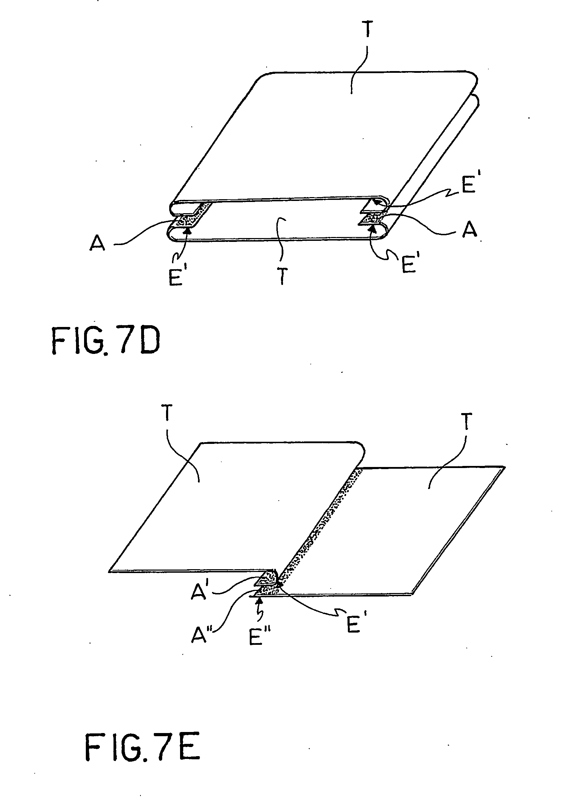

In Fig. 7D, a join is shown between two pieces T of woven or nonwoven fabric by overlapping the two pieces T such that the equal faces are faced to each other, and by folding the edges E' before interposing a polymeric bioadhesive layer A. This type of join is known in the field as the right folded to right folded join.

In Fig. 7E, a join is shown between two pieces T of woven or nonwoven fabric by overlapping the two edges E' and E" with two polymeric bioadhesive layers A' ed A" being interposed therebetween, similar to that shown in Fig. 7A, except that one of the two edges E' of a piece T has been folded and a first layer A' and a second layer A " are deposited between within the fold and between the fold and edge E " of the other piece T, respectively. This type of join is known in the field as the two glue-coat join.

According to a further variant embodiment of the invention, as stated above, the method can comprise a traditional sewing step by means of a very fine thread, preferably a thread having a titre ranging between 18 and 36. Alternatively, the thread can be a thread conventionally used for sewing but the seam can be made such that the stitches are loose or positioned only in certain parts of the finished product, or in addition, the seam can be conventional but covered by an adhesive tape such as that described above.

In accordance with a further object of the invention, a fabric item is provided which comprises one or more pieces of fabric that are joined according to the method described above.

Particularly, the item comprises two or more pieces of fabric that are joined by means of heat-sealing. Said pieces are heat-sealed to each other for example at the free edges thereof. Preferably, the free edges are salvage sewed. More preferably, the heat-sealed edges are covered with bands made of antiallergic and/or soft and/or reinforcement material optionally with writings and/or decorative drawings. Furthermore, the bands can be applied to either one or both counter-posed surfaces of the item.

Preferably, said item comprises items of clothing, upholstery, and the like. Particularly, the item of clothing is selected from trousers, jeans, shirts, coats, jackets, jerseys, sweaters.

The fabrics of the items of clothing can be conventional cotton, wool, polyester, denim and mixes thereof.

Obviously, to the method and item according to the present invention, those skilled in the art, aiming at meeting contingent and specific requirements, may carry out further modifications and variations, all being however contemplated within the scope of protection of the invention, such as defined in the annexed claims.

## Claims

1. A method for joining two or more pieces of fabric comprising the following sequential steps:
- providing two or more pieces of woven or nonwoven fabric;
- pre-heating at least the edges of said pieces at a temperature ranging between 50°C and 200°C;
- applying on at least one of the respective edges of said pieces to be joined a bioadhesive layer consisting of a polyester-based polyurethane polymer;
- applying pressure and heat to heat-melt and press said polymer layer such as to cause the latter to penetrate between the fibers of said pieces of woven or non woven fabric and create an integral join to each other.

2. The method according to claim 1, wherein the step of applying temperature and pressure provides using pressures ranging between 1.3 bar and 7 bar and temperatures ranging between 140°C and 220°C, for a time ranging between 10 sec and 30 sec.

3. The method according to claim 2, wherein the pressure ranges between 5.5 bar and 6.5 bar, more preferably it is 6 bar, whereas the temperature ranges between 195°C and 205°C, more preferably it is 200°C and the time is 19 sec to 21 sec, more preferably it is 20 sec.

4. The method according to any claim 1 to 3, wherein the polyester-based polyurethane polymer has 78A shore hardness, 124°C softening point, and Melt Flow Index of 13-18.5 dg/min at 190°C, 2.16 kg.

5. The method according to any claim 1 to 4 further comprising a preliminary step of treating the edges of said pieces of fabric such as to remove impurities and
residues of glues or chemicals that can alter the function of the polymeric adhesive.

6. The method according to claim 5, wherein this treatment comprises washings, oxidative and/or enzymatic desizing, bio-polishing, stone-polishing.

7. The method according to claim 5 or 6, further comprising, after said treatment step, a step of working said edges by means of salvaging.

8. The method according to any claim 1 to 7, further comprising a final settling step at the end of the step of applying heat and pressure carried out under controlled conditions of temperature ranging between 18°C and 30°C and humidity ranging between 10% and 30% for a time of no less than 12 hours.

9. The method according to any claim 1 to 8, further comprising an ironing step after the step of applying the temperature and pressure.

10. The method according to any claim 1 to 9, wherein said step of applying a bioadhesive layer is carried out using a double-adhesive tape (5) that is bridge-connected between said edges placed in contact with each other.

11. The method according to claim 10, wherein said double-adhesive tape (5) comprises a heat-resistant backing (6) having a first face (7) and a second face (8) covered with a web of heat-sealing substance, which is, in turn, protected by a removable heat-resistant strip (7', 8').

12. The method according to claim 11, wherein one of the two protective strips (7', 8') is removed to allow the double-adhesive tape to be laid on the seams (3, 4).

13. The method according to any claim 1 to 12, wherein the pressing and heating step is carried out by means of a hot press or by passing through two overheated rolls.

14. The method according to any claim 10 to 13, wherein said method is carried out on either one or both surfaces of said at least two (1, 2) pieces of fabric.

15. The method according to any claim 10 to 14, further comprising a step of applying a band (11) to cover said double-adhesive tape (5).

16. The method according to any claim 1 to 8, wherein said step of applying a bioadhesive layer is carried out by applying the bioadhesive layer directly on at least one of said edges.

17. The method according to claim 16, wherein the joining of said pieces is carried out by rightside to backside join, backside to backside join, rightside to right folded join, right folded to right folded join, or two bioadhesive-coat join.

18. The method according to any claim 1 to 17, further comprising a thread sewing step for joining said edges of said pieces of woven or nonwoven fabric.

19. The method according to claim 18, wherein said sewing is carried out with a thread having a titre ranging between 18 and 36.

20. The method according to any claim 1 to 19, further comprising a gradual cooling step ranging between 1 and 5 minutes to avoid thermal shocks to said polymeric adhesive right after the heating or pressing step.

## Patentansprüche

1. Verfahren zum Verbinden wenigstens zweier Teile aus Stoff, umfassend folgende, aufeinander folgende Schritte:
- Bereitstellen wenigstens zweier Teile eines gewebten oder vliesartigen Stoffes;
- Vorwärmen wenigstens der Ränder der Teile mit einer Temperatur zwischen 50°C und 200°C;
- Auftragen auf wenigstens einen der jeweiligen Ränder der zu verbindenden Teile einer bioadhäsiven Schicht, die aus einem Polyurethanpolymer auf Polyesterbasis besteht; und
- Anwenden von Druck und Wärme, um die Polymerschicht derart durch Wärme zu schmelzen und zu pressen um zu bewirken, dass letztgenannte die Fasern der Teile des gewebten oder vliesartigen Stoffes durchdringt und eine integrale Verbindung mit diesen herstellt.

2. Verfahren nach Anspruch 1, bei dem der Schritt des Anwendens von Temperatur und Druck die Verwendung von Drücken zwischen 1,3 bar und 7 bar und Temperaturen zwischen 140°C und 220°C für einen Zeitraum vorsieht, der zwischen 10 Sekunden und 30 Sekunden liegt.

3. Verfahren nach Anspruch 2, bei dem der Druck zwischen 5,5 bar und 6,5 bar, vorzugsweise jedoch bei 6 bar liegt, während die Temperatur zwischen 195°C und 205°C, vorzugsweise jedoch bei 200°C liegt und die Zeit zwischen 19 Sekunden und 21 Sekunden, vorzugsweise jedoch 20 Sekunden beträgt.

4. Verfahren nach einem der Ansprüche 1 bis 3, bei dem der Polyurethanpolymer auf Polyesterbasis 78A Shore-Härte, den Erweichungspunkt bei 124°C und den Schmelzindex von 13 bis 18,5 dg/min bei 190°C, 2,16 kg hat.

5. Verfahren nach einem der Ansprüche 1 bis 4, weiterhin umfassend einen vorausgehenden Schritt des Aufbereitens der Ränder der Teile aus Stoff derart, dass Verunreinigungen und Rückstände von Klebstoffen oder Chemikalien entfernt werden, die die Funktion des Polymerhaftmittels beeinflussen können.

6. Verfahren nach Anspruch 5, bei dem diese Aufbereitung Waschen, oxidatives und/oder enzymatisches Entschlichten, Biopolieren und Steinpolieren beinhaltet.

7. Verfahren nach Anspruch 5 oder 6, weiterhin umfassend nach dem Aufbereitungsschritt einen Schritt des Bearbeitens der Ränder durch Aufbringen eines Salvages.

8. Verfahren nach einem der Ansprüche 1 bis 7, weiterhin umfassend einen abschließenden Aushärtungsschritt am Ende des Schrittes des Anwendens von Wärme und Druck, der unter kontrollierten Temperaturbedingungen im Bereich zwischen 18°C und 30°C und einer Feuchtigkeit zwischen 10% und 30% bei einer Zeit von wenigstens 12 Stunden ausgeführt wird.

9. Verfahren nach einem der Ansprüche 1 bis 8, weiterhin umfassend einen Bügelschritt nach dem Schritt des Anwendens von Temperatur und Druck.

10. Verfahren nach einem der Ansprüche 1 bis 9, bei dem der Schritt des Aufbringens einer bioadhäsiven Schicht unter Verwendung eines doppelseitigen Klebebandes (5) ausgeführt wird, das brückenartig mit den Rändern verbunden wird, die in Kontakt miteinander angeordnet sind.

11. Verfahren nach Anspruch 10, bei dem das doppelseitige Klebeband (5) eine wärmefeste Kaschierung (6) enthält, die eine erste Seite (7) und eine zweite Seite (8) hat, die mit einer Bahn einer heißversiegelnden Substanz bedeckt sind, die ihrerseits mit einem lösbaren wärmefesten Streifen (7', 8') geschützt sind.

12. Verfahren nach Anspruch 11, bei dem einer der beiden Schutzstreifen (7', 8') entfernt wird, um es zu ermöglichen, das doppelseitige Klebeband auf die Säume (3, 4) zu legen.

13. Verfahren nach einem der Ansprüche 1 bis 12, bei dem der Druck- und Erwärmungsschritt mit Hilfe einer Heizpresse oder mit einem Durchlauf durch zwei beheizte Walzen erfolgt.

14. Verfahren nach einem der Ansprüche 10 bis 13, wobei das Verfahren auf einer oder beiden der Oberflächen der wenigstens zwei Teile (1, 2) aus Stoff ausgeführt wird.

15. Verfahren nach einem der Ansprüche 10 bis 14, weiterhin umfassend einen Schritt des Aufbringens eines Bandes (11), das das doppelseitige Klebeband (5) bedeckt.

16. Verfahren nach einem der Ansprüche 1 bis 8, bei dem der Schritt des Aufbringens einer bioadhäsiven Schicht durch Aufbringen der bioadhäsiven Schicht direkt auf wenigstens einen der Ränder ausgeführt wird.

17. Verfahren nach Anspruch 16, bei dem das Verbinden der Teile durch eine Verbindung von rechter Seite mit Rückseite, einer Verbindung von Rückseite mit Rückseite, einer Verbindung von rechter Seite mit gefalteter rechter Seite, einer Verbindung von gefalteter rechter Seite mit gefalteter rechter Seite oder einer Verbindung mit einer doppelten Bioadhäsiv-Beschichtung ausgeführt wird.

18. Verfahren nach einem der Ansprüche 1 bis 17, weiterhin umfassend einen Vernähungsschritt zum Verbinden der Ränder der Teile des gewebten oder vliesartigen Stoffes.

19. Verfahren nach Anspruch 18, bei dem das Vernähen mit einem Faden erfolgt, der einen Titer im Bereich zwischen 18 und 36 hat.

20. Verfahren nach einem der Ansprüche 1 bis 19, weiterhin umfassend einen Schritt des schrittweisen Kühlens in einem Bereich zwischen 1 und 5 Minuten, um Temperaturschocks an dem Polymerhaftmittel unmittelbar nach dem Erwärmungs- oder Pressschritt zu vermeiden.

## Revendications

1. Procédé d'assemblage de deux pièces de tissu ou plus comprenant les étapes séquentielles suivantes qui consistent :
à fournir deux pièces ou plus de tissu tissé ou non tissé ;
à préchauffer au moins les bords desdites pièces à une température se trouvant entre 50°C et 200°C ;
à appliquer sur au moins l'un des bords respectifs desdites pièces à assembler une couche bio-adhésive constituée d'un polymère de polyuréthane à base de polyester ;
à appliquer une pression et de la chaleur pour faire fondre thermiquement et presser ladite couche polymère de sorte à amener cette dernière à pénétrer entre les fibres desdites pièces de tissu tissé ou non tissé et à créer un assemblage intégral de celles-ci.

2. Procédé selon la revendication 1, où l'étape qui consiste à appliquer la température et la pression prévoit l'utilisation de pressions se trouvant entre 1,3 bar et 7 bars et de températures se trouvant entre 140°C et 220°C, pendant un durée entre 10 sec à 30 sec.

3. Procédé selon la revendication 2, où la pression se trouve dans une plage de 5,5 bars à 6, 5 bars, plus avantageusement de 6 bars, tandis que la température se trouve entre 195°C et 205°C, plus avantageusement de 200°C et la durée est de 19 sec à 21 sec, plus avantageusement de 20 sec.

4. Procédé selon l'une des revendications 1 à 3, où le polymère de polyuréthanne à base de polyester a une dureté Shore de 78A, un point de ramollissement 124°C et un indice de fluage de 13-18,5 dg/min à 190°C et sous 2,16 kg.

5. Procédé selon l'une des revendications 1 à 4, comprenant en outre une étape préliminaire de traitement des bords desdites pièces de tissu de sorte à retirer les impuretés et les résidus de colle ou de produits chimiques qui peuvent altérer la fonction de l'adhésif polymère.

6. Procédé selon la revendication 5, où ce traitement comprend des lavages, un désencollage enzymatique et/ou oxydant, un bio-polissage, un polissage à la pierre.

7. Procédé selon les revendications 5 ou 6, comprenant en outre, après ladite étape de traitement, une étape de travail desdits bords par une opération de protection.

8. Procédé selon l'une des revendications 1 à 7, comprenant en outre une étape de décantation finale à la fin de l'étape qui consiste à appliquer de la chaleur et de la pression réalisée sous des conditions de température régulées entre 18°C et 30°C et une humidité entre 10% et 30% pendant une durée qui n'est pas inférieure à 12 heures.

9. Procédé selon l'une des revendications 1 à 8, comprenant en outre une étape de repassage après l'étape qui consiste à appliquer la température et la pression.

10. Procédé selon l'une des revendications 1 à 9, où ladite étape qui consiste à appliquer une couche bio-adhésive est réalisée en utilisant un ruban double-adhésif (5) qui est relié en pont entre lesdits bords placés en contact l'un avec l'autre.

11. Procédé selon la revendication 10, où ledit ruban double-adhésif (5) comprend une sous-couche (6) résistante à la chaleur ayant une première face (7) et une deuxième face (8) couvertes d'un voile d'une substance étanche à la chaleur, qui est, à son tour, protégée par une bande (7', 8') amovible résistante à la chaleur.

12. Procédé selon la revendication 11, où l'une des deux bandes protectrices (7', 8') est retirée pour permettre au ruban double-adhésif de s'étendre sur les coutures (3, 4).

13. Procédé selon l'une des revendications 1 à 12, où l'étape de chauffage et de pression est réalisée au moyen d'une presse à chaud ou par passage à travers deux rouleaux surchauffés.

14. Procédé selon l'une des revendications 10 à 13, où ledit procédé est réalisé sur l'une ou sur les deux surfaces desdites au moins deux pièces de tissu (1, 2).

15. Procédé selon l'une des revendications 10 à 14, comprenant en outre une étape qui consiste à appliquer une bande (11) pour couvrir ledit ruban double-adhésif (5).

16. Procédé selon l'une des revendications 1 à 8, où ladite étape qui consiste à appliquer une couche bio-adhésive est réalisée en appliquant la couche bio-adhésive directement sur au moins l'un desdits bords.

17. Procédé selon la revendication 16, où l'assemblage desdites pièces est réalisé par un assemblage endroit contre envers, un assemblage envers contre envers, un assemblage endroit contre pli à l'endroit, un assemblage pli à l'endroit contre pli à l'endroit, ou deux assemblages à revêtement bio-adhésif.

18. Procédé selon l'une des revendications 1 à 17, comprenant en outre une étape de couture au fil pour assembler lesdits bords desdites pièces de tissu tissé ou non tissé.

19. Procédé selon la revendication 18, où ladite couture est réalisée avec un fil ayant un titrage entre 18 et 36.

20. Procédé selon l'une des revendications 1 à 19, comprenant en outre une étape de refroidissement graduel entre 1 et 5 minutes afin d'éviter les chocs thermiques audit adhésif polymère juste après l'étape de chauffage ou de pression.
